# EUROPEAN PATENT APPLICATION

(11) **EP 2 512 070 A1**
(43) Date of publication of application: **17.10.2012**
(21) Application number: 10840477.3
(22) Date of filing: 06.12.2010
(51) Int. Cl.: H04L 12/437, H04L 12/40

(54) **PROTECTION METHOD, EQUIPMENT AND SYSTEM FOR SEMI-RING NETWORK**

(30) Priority: 30.12.2009 CN 200910266045
(71) Applicant: Huawei Technologies Co., Ltd., Guangdong 518129 (CN)
(72) Inventor: PU, Yun, Shenzhen Guangdong 518129 (CN)
(74) Representative: Thun, Clemens
(86) International application number: PCT/CN2010/079452
(87) International publication number: WO 2011/079688

(57) **Abstract**

The present invention discloses a method for protecting a semi-ring network. The method includes: running an Ethernet ring network protection protocol at a networking port of each non-closed ring node and a networking port of each closed ring node on a semi-ring network, and adding all networking ports into a virtual local area network that is corresponding to a protection instance; and establishing a pseudo wire PWE3 based or message mechanism based connection between non-closed ring nodes on the semi-ring network, where the connection is used to transfer an Ethernet ring network protection protocol packet of the protection instance. Based on the protection method, the embodiments of the present invention further provide a network device and a system for protecting a semi-ring network.

## Description

This application claims priority to Chinese Patent Application No. 200910266045.2, filed with the Chinese Patent Office on December 30, 2009 and entitled "METHOD, DEVICE, AND SYSTEM FOR PROTECTING SEMI-RING NETWORK", which is incorporated herein by reference in its entirety.

### FIELD OF THE INVENTION

The present invention relates to the field of communications technologies, and in particular, to a method, a device, and a system for protecting a semi-ring network.

### BACKGROUND OF THE INVENTION

A special network topology structure of a ring network provides convenience for implementing a simple and rapid network protection capability. Ethernet ring network protection includes a conventional Ethernet ring protection (Ethernet Ring Protection, ERP) protocol, an Ethernet automatic protection switching (Ethernet Automatic Protection Switching, EAPS) protocol, a rapid ring protection protocol (Rapid Ring Protection Protocol, RRPP), where the three has the same principle basically, and are all capable of supporting a plurality of instances.

An EAPS/RRPP/ERP instance may protect a service flow of one or multiple virtual local area networks (Virtual Local Area Network, VLAN). One or multiple EAPS/RRPP/ERP instances may exist on one Ethernet ring network. For one EAPS/RRPP/ERP instance, when an Ethernet ring network is in a normal state, a ring protection link (Ring Protection Link, RPL) is generally implemented at a designated ring node, a service flow of the RPL link is blocked, and a service flow of a protected VLAN can be transmitted on all links except the RPL link on a ring. When the Ethernet ring network is faulty, an originally blocked port at the designated ring node is opened, and the RPL link can be used to transmit the service flow of the VLAN.

In a process of implementing the present invention, through research, the inventor finds that, several types of protection technologies of the Ethernet ring network all require that the whole network be a complete ring formed by a layer 2 forwarding network, but no ring exists in some cases. For example, in some scenarios of networking of access networks, there is no directly-connected link between two convergence switches, and therefore a complete layer 2 Ethernet ring does not exist.

### SUMMARY OF THE INVENTION

Embodiments of the present invention provide a method, a device, and a system for protecting a semi-ring network, so that ring protection can be performed in a semi-ring case.

An embodiment of the present invention provides a method for protecting a semi-ring network, where the method includes:
running an Ethernet ring network protection protocol at a networking port of each non-closed ring node and a networking port of each closed ring node on a semi-ring network and adding all networking ports into a virtual local area network that is corresponding to a protection instance; and
establishing a pseudo wire PWE3 based or message mechanism based connection between non-closed ring nodes on the semi-ring network, where the connection is used to transfer an Ethernet ring network protection protocol packet of the protection instance.

An embodiment of the present invention provides a network device, including:
a protocol running unit, configured to run an Ethernet ring network protection protocol at a networking port and add the networking port into a virtual local area network that is corresponding to a protection instance; and
a connecting unit, configured to establish a pseudo wire PWE3 based or message mechanism based connection with another network device on a semi-ring network, where the connection is used to transfer an Ethernet ring network protection protocol packet of the protection instance.

An embodiment of the present invention provides a system for protecting a semi-ring network, where the system includes a non-closed ring node and a closed ring node, where an Ethernet ring network protection protocol is run at a networking port of each non-closed ring node and a networking port of each closed ring node; all networking ports are added into a virtual local area network that is corresponding to a protection instance; and a pseudo wire PWE3 based or message mechanism based connection is established between non-closed ring nodes, where the connection is used to transfer an Ethernet ring network protection protocol packet of the protection instance.

It can be known from the technical solutions provided in the embodiments of the present invention that, an Ethernet ring network protection protocol is run at a networking port of each non-closed ring node and a networking port of each closed ring node on a semi-ring network, all networking ports are added into a virtual local area network that is corresponding to a protection instance, and a pseudo wire PWE3 based or message mechanism based connection is established between non-closed ring nodes on the semi-ring network, where the connection is used to transfer an Ethernet ring network protection protocol packet of the protection instance, so that a directly-connected link can be simulated. In this way, the semi-ring network may be regarded as a complete ring network formed by a layer 2 forwarding network, and a technology which is the same as that of Ethernet ring network protection is adopted to implement protection of the semi-ring network.

### BRIEF DESCRIPTION OF THE DRAWINGS

To describe the technical solutions in the embodiments of the present invention more clearly, the accompanying drawings required for describing the embodiments are introduced briefly in the following.
FIG. 1 is a schematic diagram of a method for protecting a semi-ring network according to an embodiment of the present invention;
FIG. 2 is a structural diagram of a semi-ring network according to an embodiment of the present invention;
FIG. 3 is a schematic diagram when a connection between a convergence switch 1 and a BRAS in FIG. 2 is broken;
FIG. 4 is a schematic diagram of opening, by a master node switch 2, a blocked ring protection link port Port2 in FIG. 3;
FIG. 5 is a schematic diagram when a fault occurs between a switch 1 and a convergence switch 1 in FIG. 2;
FIG. 6 is a diagram of functional units of a network device according to an embodiment of the present invention; and
FIG. 7 is a schematic structural diagram of a system for protecting a semi-ring network according to an embodiment of the present invention.

### DETAILED DESCRIPTION OF THE EMBODIMENTS

In order to make the objectives, technical solutions, and advantages of the present invention clearer, the technical solutions provided in the embodiments of the present invention are described in further detail in the following through the embodiments and with reference to the accompanying drawings.

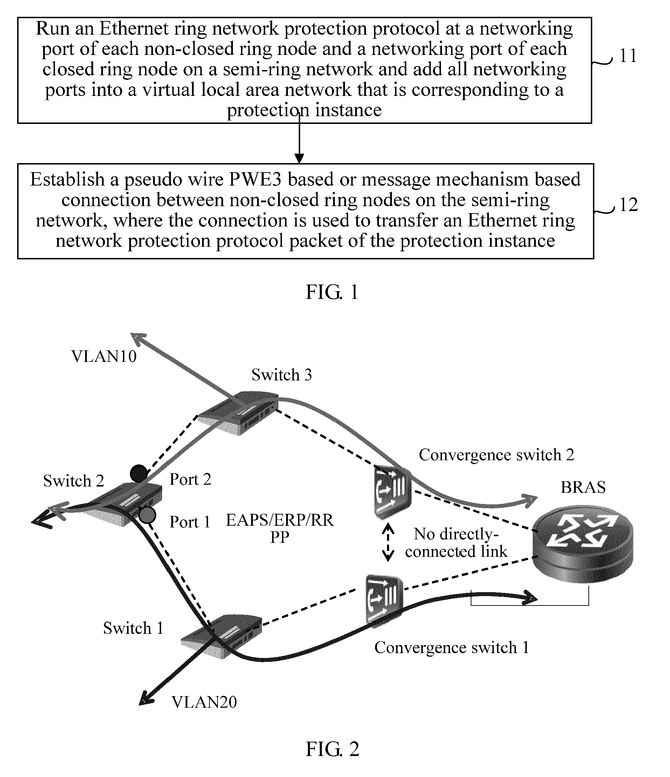

Referring to FIG 1, an embodiment of the present invention provides a method for protecting a semi-ring network, where the method includes the following contents.
11: Run an Ethernet ring network protection protocol at a networking port of each non-closed ring node and a networking port of each closed ring node on a semi-ring network, and add all networking ports into a virtual local area network that is corresponding to a protection instance.
12: Establish a pseudo wire PWE3 based or message mechanism based connection between non-closed ring nodes on the semi-ring network, where the connection is used to transfer an Ethernet ring network protection protocol packet of the protection instance.

With the method for protecting a semi-ring network provided in this embodiment of the present invention, the Ethernet ring network protection protocol is run at the networking port of each non-closed ring node and the networking port of each closed ring node on the semi-ring network, all the networking ports are added into the virtual local area network that is corresponding to the protection instance, and the pseudo wire PWE3 based or message mechanism based connection between the non-closed ring nodes on the semi-ring network is established, where the connection is used to transfer the Ethernet ring network protection protocol packet of the protection instance, so that a directly-connected link can be simulated. In this way, the semi-ring network may be regarded as a complete ring network formed by a layer 2 forwarding network, and a technology which is the same as that of Ethernet ring network protection is adopted to implement protection of the semi-ring network.

Semi-ring network protection provided in this embodiment of the present invention further includes the following contents.

A master node of the protection instance is configured. When the master node is in a normal state, the master node blocks a ring protection link RPL which is directly connected to the master node.

When a non-closed ring node on the semi-ring network detects that an uplink is faulty, or when a closed ring node on the semi-ring network detects that a link on a ring is faulty, a fault message is sent to notify the master node, and the master node opens a blocked RPL port after receiving the fault message.

The master node sends a HELLO message from a non-RPL port periodically, and if a HELLO message sent by the master node is received from a PRL port, changes a state back to a normal state and blocks the RPL port.

When the master node of the protection instance is configured, in order to make a blocked ring protection link RPL in a normal state most reasonable, a node which is farthest away from the semi-ring network, in the protection instance, may be configured as a master node.

The Ethernet ring network protection protocol in this embodiment of the present invention may be any one of the following: a conventional Ethernet ring protection protocol ERP, or an Ethernet automatic protection switching protocol EAPS, or a rapid ring protection protocol RRPP.

The method for protecting a semi-ring network provided in the present invention is described in the following by taking an example, in which a pseudo wire PWE3 based connection between non-closed ring nodes on the semi-ring network is established.

A pseudo wire PWE3 (Pseudo Wire Emulation Edge-to-Edge, pseudo wire emulation edge-to-edge) is an end-to-end layer 2 service bearing technology, which belongs to a point-to-point layer 2 virtual private network (Layer2 Virtual Private Network, L2VPN) technology. In two provider edges (Provider Edge, PE) of a packet switching network (Packet Switching Network, PSN), the pseudo wire PWE3 takes a label distribution protocol (Label Distribution Protocol, LDP) or a resource reservation protocol (Resource Reservation Protocol, RSVP) as signaling to simulate various layer 2 services, such as various layer 2 data packets (including an Ethernet frame) and a bit stream, of a custom edge (Custom Edge, CE) end through a tunnel, for example, may be a multi-protocol label switching (Multi-Protocol Label Switching, MPLS) tunnel, a generic routing encapsulation protocol (Generic Routing Encapsulation, GRE), or a layer 2 tunneling protocol version 3 (Layer2 Tunneling Protocol, L2TPv3), or the like, so that layer 2 data of the CE end is transferred transparently in the PSN network.

Referring to FIG. 2, an EAPS/ERP/RRPP protocol is run at a networking port of each node on a semi-ring network, and the networking port of each node on the semi-ring network includes two networking ports of each switch and a port through which a convergence switch is connected to a switch (in which, witches 1, 2, and 3 are closed ring nodes on the semi-ring network, and convergence switches 1 and 2 are non-closed ring nodes on the semi-ring network) in FIG. 2. Actions of these ports completely comply with the EAPS/ERP/RRPP protocol. According to a requirement of the protocol, all of these ports need to be added into a virtual local area network VLAN that is corresponding to a protection instance.

Distribution of VLAN services are planned, where all of the VLAN services are reasonably planned into corresponding protection instances. For example, in FIG. 2, all of VLAN services on the semi-ring are planned into two protection instances, where one is a VLAN10 protection instance, and the other is a VLAN20 protection instance. Networking ports of each node on the semi-ring network are added into the VLAN10 and VLAN20 protection instances respectively. It may be understood that, the method for protecting a semi-ring provided in this embodiment of the present invention may support a plurality of protection instances, which are not limited to the foregoing two protection instances.

Since a layer 2 directly-connected link does not exist between two non-closed nodes, according to the EAPS/ERP/RRPP protocol, a link is faulty. In this embodiment, a directly connected link is simulated by establishing a PWE3 pseudo wire between non-closed ring nodes, where the PWE3 pseudo wire is used to transfer an EAPS/ERP/RRPP protocol packet of the protection instances. Specifically, in FIG. 2, two Ethernet PWE3 pseudo wires are established between the convergence switch 1 and the convergence switch 2 through a broadband remote access server (Broadband Remote Access Server, BRAS), and are used to transfer EAPS/ERP/RRPP protocol packets of the VLAN10 and the VLAN20. An Ethernet frame of another non-EAPS/ERP/RRPP protocol packet does not undergo PWE3 encapsulation. For example, when a networking port (a port connected to the switch 1) of the convergence switch 1 receives an Ethernet frame, first, it is determined whether a VLAN is 20, and if the VLAN is 20, it is further determined, through a type, whether a packet is an EAPS/ERP/RRPP protocol packet. If yes, PWE3 encapsulation is performed, and then the packet after the PWE3 encapsulation is sent to the convergence switch 2 through a tunnel of the BRAS. If the packet is VLAN20 but is not an EAPS/ERP/RRPP protocol packet, the packet is forwarded according to a normal forwarding procedure.

A node, which is farthest away from a network, in a protection instance, is configured to be a master node. In FIG. 2, a node which is in the VLAN10 and VLAN20 protection instances and is farthest away from a network, that is, a node which is farthest away from a convergence switch or a BRAS, is the switch 2.

According to the EAPS/ERP/RRPP protocol, when the master node is in a normal state, the master node blocks the ring protection link RPL which is directly connected to the master node. Specifically, in FIG. 2, an RPL of the VLAN10 protection instance is a link between the switch 1 and the switch 2, and therefore, for VLAN10, a Port 1 of the switch 2 is blocked. An RPL of the VLAN20 protection instance is a link between the switch 2 and the switch 3, and therefore, for VLAN20, a Port 2 of the switch 2 is blocked.

It should be noted that, according to the EAPS/ERP/RRPP protocol, when a node on the Ethernet ring network that detects a direct link is faulty, a fault message needs to be sent to notify another device on a ring. However, in the semi-ring network in the present invention, when a non-closed ring node detects that a PW is faulty, a fault message is not sent to notify another node on the ring. A reason is that a topology of a semi-ring is not changed in this case. Detection of a link may be implemented through virtual circuit connectivity verification (Virtual Circuit Connectivity Verification, VCCV) or through a bidirectional forwarding detection (Bidirectional Forwarding Detection, BFD) that is used for a pseudo wire (Pseudo Wire, PW).

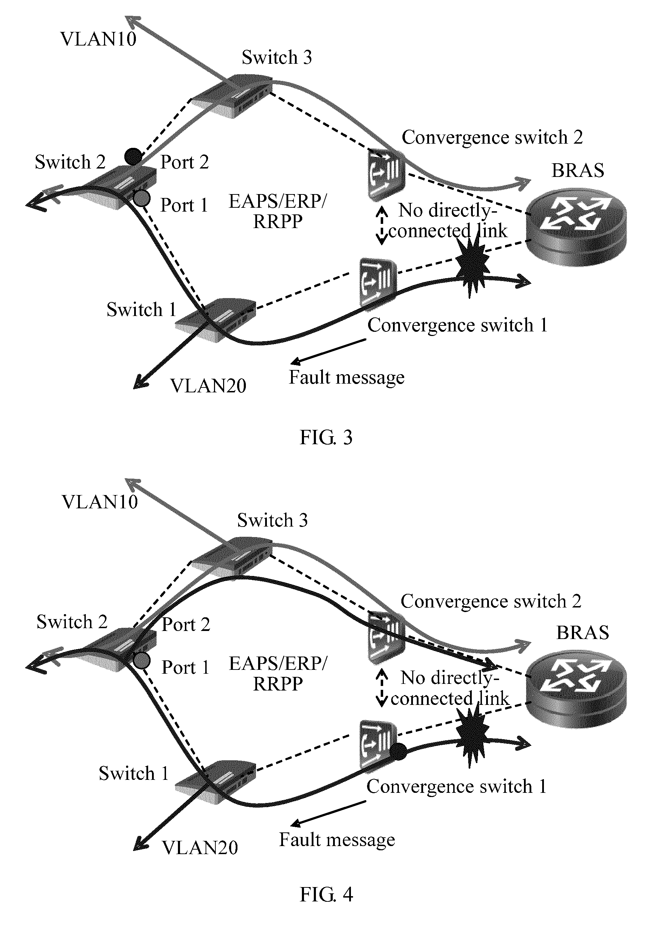

When a non-closed ring node on the semi-ring detects that an uplink is faulty, a fault message is sent to notify a closed ring node on the semi-ring. Referring to FIG. 3, when a convergence switch 1 detects that a connection between the convergence switch 1 and a BRAS is broken, the convergence switch 1 sends an EAPS/ERP/RRPP fault message to a switch 1. The connection between the convergence switch 1 and the BRAS may be detected through various detection means, which include an Internet control message protocol (Internet Control Message Protocol, ICMP) Ping command, an Ethernet operations, administration, and maintenance (Operations, Administration, and Maintenance, ETH OAM), and so on. After a master node switch 2 of a protection instance VLAN20 receives the fault message that is forwarded through the switch 1, according to an EAPS/ERP/RRPP protocol, the master node switch 2 opens a blocked RPL port Port2. In this way, service data of the VLAN20 protection instance is moved upwards through a convergence switch 2, as shown in FIG. 4. However, a protection instance VLAN10 does not have a corresponding fault notification message, therefore, its service data is moved upwards still through the convergence switch 2.

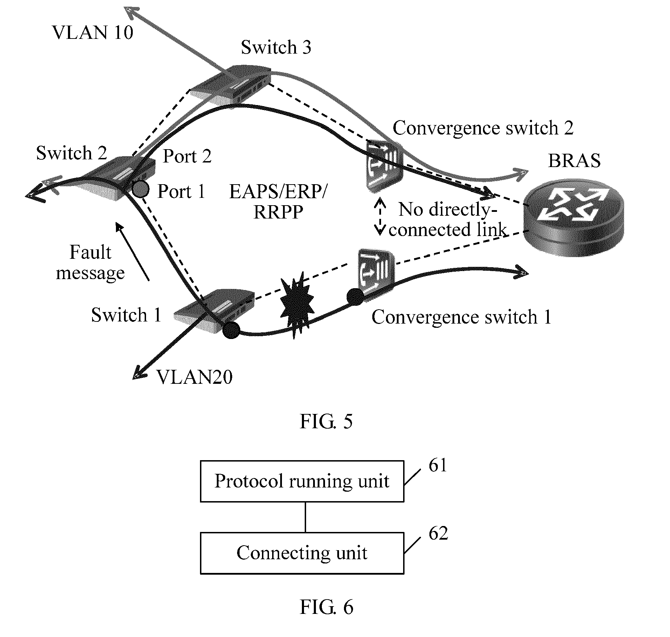

When a closed ring node on a semi-ring detects that a link on a ring is faulty, processing may be performed according to a normal EAPS/ERP/RRPP protocol. Specifically, in FIG. 5, when a fault occurs between a switch 1 and a convergence switch 1, the switch 1 sends a fault message to a switch 2, and the convergence switch 1 sends a fault message to a convergence switch 2 through a pseudo wire PWE3. After receiving the fault message sent through the switch 1, according to an EAPS/ERP/RRPP protocol, a master node switch 2 of a protection instance VLAN20 opens a blocked RPL port Port2. In this way, service data of the VLAN20 protection instance is moved upwards through the convergence switch 2. However, a protection instance VLAN10 does not have a corresponding fault notification message, therefore, its service data is moved upwards still through the convergence switch 2. Likewise, when a fault occurs between the switch 1 and the switch 2, according to the EAPS/ERP/RRPP protocol, the switch 1 sends a fault notification message to the convergence switch 1, and the convergence switch 1 sends a fault message to the convergence switch 2 through the pseudo wire PWE3, and the switch 2 opens the blocked RPL port Port2 of the VLAN20 protection instance. At this time, the service data of the protection instance VLAN20 is moved upwards through the convergence switch 1 and the convergence switch 2.

Being the same as a master node on an Ethernet ring network, the master node of the semi-ring network, provided in the present invention, also sends a HELLO message from a non-RPL port periodically. After all faulty links on the semi-ring network are recovered, the master node can receive a HELLO message sent by the master node itself from an RPL port. At this time, first the master node changes a state back to a normal state, blocks the RPL port, refreshes a new media access control address (Media Access Control, MAC) forwarding table, and then sends a fault recovery message from a non-RPL port. After receiving the fault recovery message, nodes on the semi-ring refresh their respective forwarding tables. Specifically, in FIG. 5, the master node switch 2 of the VLAN20 protection instance sends a HELLO message to a Port1 continuously. After the fault between the switch 1 and the convergence switch 1 is recovered, the convergence switch 1 receives a HELLO message. The convergence switch 1 encapsulates the HELLO message into a pseudo wire PWE3, and then the message is transferred to the convergence switch 2 through a BRAS. Then the convergence switch 2 sends the message to the switch 2 through a switch 3. The master node switch 2 finds that the master node switch 2 can receive a HELLO message sent by the master node switch 2 itself, it may be determined that a network is recovered to be normal, and the RPL port Port2 of the master node switch 2 is blocked again.

In conclusion, the pseudo wire PWE3 based connection is established between the non-closed ring nodes on the semi-ring network and is used to transfer the Ethernet ring network protection protocol packet of the protection instance, so that a directly-connected link can be simulated. In this way, the semi-ring network may be regarded as a complete ring network formed by a layer 2 forwarding network, and a technology which is the same as that of Ethernet ring network protection is adopted to implement protection of the semi-ring network.

It should be noted that, differences between the simulated directly-connected link and an actual directly-connected link lie in that: A non-closed ring node on the semi-ring network needs to detect a state of an uplink and notify another node on the ring; an Ethernet ring network protection protocol packet needs to be transparently transmitted through a PW; and special processing that a fault message is not sent when a PW fault of the simulated directly-connected link is detected is performed.

Establishing a message mechanism based connection between non-closed ring nodes on the semi-ring network is similar to establishing the pseudo wire PWE3 based connection. A difference lies in that: A PWE3 connection is not established, but two non-closed ring nodes communicate with each other through a message mechanism. The message mechanism includes generic protocols or private protocols of an extended link layer, network layer, transmission layer, and application layer. For example, in FIG. 2, a user datagram protocol (User Datagram Protocol, UDP) or transmission control protocol (Transmission Control Protocol, TCP) connection may be established between the convergence switch 1 and the convergence switch 2. When the convergence switch 1 receives an EAPS/ERP/RRPP protocol packet, the convergence switch 1 carries the packet to the convergence switch 2 through an UDP/TCP protocol. After restoring related packet information, the convergence switch 2 continues to send the packet to the switch 3.

It should be noted that, in semi-ring protection provided in the present invention, no matter whether the pseudo wire PWE3 based connection or the message mechanism based connection is established between two non-closed ring nodes, a fault message and a fault recovery message both do not need to be transferred, but only a HELLO message is transferred.

Based on the embodiments of the method for protecting a semi-ring network provided in the present invention, referring to FIG. 6, an embodiment of the present invention provides a network device, including:
a protocol running unit 61, configured to run an Ethernet ring network protection protocol at a networking port and add the networking port into a virtual local area network that is corresponding to a protection instance; and
a connecting unit 62, configured to establish a pseudo wire PWE3 based or message mechanism based connection with another network device on a semi-ring network to transfer an Ethernet ring network protection protocol packet of the protection instance.

Since a layer 2 directly-connected link does not exist between two non-closed ring nodes on the semi-ring network, according to the Ethernet ring network protection protocol, a link is faulty. In this embodiment, the pseudo wire PWE3 based or message mechanism based connection is established between network devices and is used to transfer the Ethernet ring network protection protocol packet of the protection instance, so that a directly-connected link can be simulated. In this way, the semi-ring network may be regarded as a complete ring network formed by a layer 2 forwarding network, and a technology which is the same as that of Ethernet ring network protection is adopted to implement protection of the semi-ring network.

According to the Ethernet ring network protection protocol, when a master node is in a normal state, the master node blocks a ring protection link RPL which is directly connected to the master node. When a non-closed ring node on a semi-ring detects that an uplink is faulty, or when a closed ring node on the semi-ring network detects that a link on a ring is faulty, a fault message is sent to notify the master node, and the master node opens a blocked ring protection link RPL port according to the received fault message. Therefore, the network device provided in this embodiment may further include:
a fault notifying unit, configured to, when an uplink fault is detected, send a fault message to notify the master node, so that the master node opens the blocked ring protection link RPL port after receiving the fault message.

Being the same as a master node on an Ethernet ring network, the master node on the semi-ring network also sends a HELLO message from a non-RPL port periodically. After all faulty links on the semi-ring network are recovered, the master node can receive, from an RPL port, a HELLO message sent by the master node itself. At this time, the master node changes a state back to a normal state and blocks the RPL port. Therefore, the network device provided in this embodiment may further include:
a message transferring unit, configured to transfer a HELLO message to another network device on the semi-ring network, where the HELLO message is periodically sent by the master node.

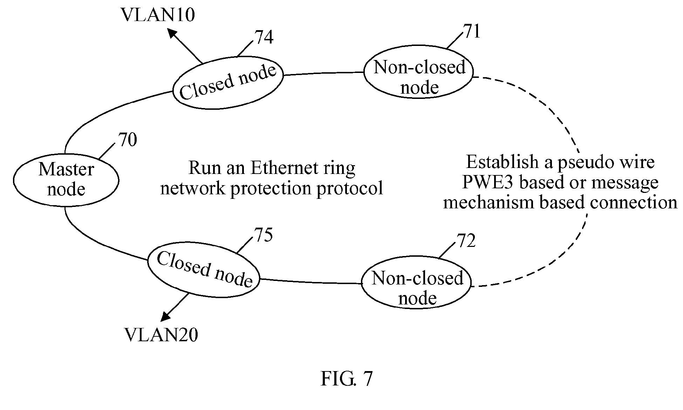

Likewise, based on the embodiments of the method for protecting a semi-ring network provided in the present invention, referring to FIG. 7, an embodiment of the present invention provides a system for protecting a semi-ring network, where the system includes non-closed ring nodes 71 and 72 and closed ring nodes 70, 74, and 75. An Ethernet ring network protection protocol is run a networking port of each non-closed ring node and a networking port of each closed ring node; all networking ports are added into virtual local area networks VLAN10 and VLAN20 that are corresponding to a protection instance; and a pseudo wire PWE3 based or message mechanism based connection is established between the non-closed ring nodes 71 and 72, and is used to transfer an Ethernet ring network protection protocol packet of the protection instance.

With the system for protecting a semi-ring network in this embodiment, the node 70 which is farthest away from the semi-ring network, in the protection instance, is further configured as a master node, and when the master node 70 is in a normal state, the master node 70 blocks a ring protection link RPL which is directly connected to the mast node 70.

When the non-closed ring nodes 71 and 72 detect that an uplink is faulty, or when the closed ring nodes 74 and 75 detect that a link on a ring is faulty, a fault message is sent to notify the master node 70, and the master node opens a blocked RPL port after receiving the fault message.

The master node 70 sends a HELLO message from a non-RPL port periodically, and if receiving, from a PRL port, a HELLO message sent by the master node 70 itself, the master node 70 changes a state back to a normal state and blocks the RPL port.

It should be noted that, persons of ordinary skill in the art may understand that, all or a part of procedures in the method according to the foregoing embodiments may be accomplished by a computer program instructing relevant hardware. The program may be stored in a computer-readable storage medium. When the program is executed, the procedures of the method according to each foregoing embodiment are performed.

Each functional unit in the embodiments of the present invention may be integrated in one processing module, it may also be that each unit exists physically and separately, and it may also be that two or more units are integrated in one module. The foregoing integrated module may be implemented in the form of hardware, and may also be implemented in the form of a software functional module. If the integrated module is implemented in the form of a software functional module and sold or used as an independent product, the integrated module may also be stored in a computer readable storage medium. The foregoing storage medium may be a read-only memory, a magnetic disk, or an optical disk.

The foregoing embodiments are not intended to limit the present invention. For persons of ordinary skill in the art, any modification, equivalent replacement, and improvement made without departing from the principle of the present invention shall fall within the protection scope of the present invention.

## Claims

1. A method for protecting a semi-ring network, comprising:
running an Ethernet ring network protection protocol at a networking port of each non-closed ring node and a networking port of each closed ring node and adding all networking ports into a virtual local area network that is corresponding to a protection instance; and
establishing a pseudo wire PWE3 based or message mechanism based connection between non-closed ring nodes on the semi-ring network, wherein the connection is used to transfer an Ethernet ring network protection protocol packet of the protection instance.

2. The method for protecting a semi-ring network according to claim 1, wherein the method further comprises:
configuring a master node of the protection instance, wherein when the master node in a normal state, the master node blocks a ring protection link RPL which is directly connected to the master node;
when a non-closed ring node on the semi-ring network detects that an uplink is faulty or when a closed ring node on the semi-ring network detects that a link on a ring is faulty, sending a fault message to notify the master node, wherein the master node opens a blocked RPL port after receiving the fault message; and
sending, by the master node, a HELLO message from a non-RPL port periodically, and if receiving, from a PRL port, the HELLO message sent by the master node itself, changing a state back to a normal state and blocking the RPL port.

3. The method for protecting a semi-ring network according to claim 2, wherein the configuring the master node of the protection instance specifically is:
configuring a node which is farthest away from the semi-ring network, in the protection instance, as the master node.

4. The method for protecting a semi-ring network according to claim 1, wherein the Ethernet ring network protection protocol is any one of the following: a conventional Ethernet ring protection protocol ERP, or an Ethernet automatic protection switching protocol EAPS, or a Rapid Ring Protection Protocol RRPP.

5. A network device, comprising:
a protocol running unit, configured to run an Ethernet ring network protection protocol at a networking port and add the networking port into a virtual local area network that is corresponding to a protection instance; and
a connecting unit, configured to establish a pseudo wire PWE3 based or message mechanism based connection with another network device on a semi-ring network to transfer an Ethernet ring network protection protocol packet of the protection instance.

6. The network device according to claim 5, further comprising:
a fault notifying unit, configured to, when an uplink fault is detected, send a fault message to notify the master node, so that the master node opens a blocked ring protection link RPL port after receiving the fault message.

7. The network device according to claim 5, further comprising:
a message transferring unit, configured to transfer a HELLO message to the another network device on the semi-ring network, wherein the HELLO message is periodically sent by the master node.

8. A system for protecting a semi-ring network, comprising a non-closed ring node and a closed ring node, wherein an Ethernet ring network protection protocol is run at a networking port of each non-closed ring node and a networking port of each closed ring node; all networking ports are added into a virtual local area network that is corresponding to a protection instance; and a pseudo wire PWE3 based or message mechanism based connection is established between the non-closed ring nodes and is used to transfer an Ethernet ring network protection protocol packet of the protection instance.

9. The system for protecting a semi-ring network according to claim 8, wherein in the protection system, a node which is farthest away from the semi-ring network, in the protection instance, is further configured as a master node, and when the master node is in a normal state, the master node blocks a ring protection link RPL which is directly connected to the master node; wherein
when the non-closed ring node detects that an uplink is faulty, or when the closed ring node detects that a link on a ring is faulty, a fault message is sent to notify the master node, and the master node opens a blocked RPL port after receiving the fault message; and
the master node sends a HELLO message from a non-RPL port periodically, and if a HELLO message sent by the master node itself is received from a PRL port, changes a state back to a normal state and blocks the RPL port.
